(19) Europäisches Patentamt
European Patent Office
Office européen des brevets

(11) Numéro de publication: **0 099 374**
**B1**

# (12) FASCICULE DE BREVET EUROPEEN

(45) Date de publication du fascicule du brevet: **08.05.85**

(51) Int. Cl.⁴: **C 09 D 5/34**, C 08 L 67/04, C 08 L 9/00, C 08 L 75/04

(21) Numéro de dépôt: **83900351.4**

(22) Date de dépôt: **20.01.83**

(86) Numéro de dépôt international: **PCT/FR 83/00015**

(87) Numéro de publication internationale: **WO 83/02453 (21.07.83 Gazette 83/17)**

## (54) NOUVELLE UTILISATION D'UN MATERIAU THERMOPLASTIQUE EN TANT QUE MOYEN DE SCELLEMENT, NOTAMMENT POUR LA FIXATION D'INSERT.

(30) Priorité: **20.01.82 FR 8200858**

(43) Date de publication de la demande: **01.02.84 Bulletin 84/5**

(45) Mention de la délivrance du brevet: **08.05.85 Bulletin 85/19**

(84) Etats contractants désignés: **AT BE CH DE FR GB LI LU NL SE**

(56) Documents cités
**GB - A - 878 542**
**GB - A - 1 416 144**

(73) Titulaire: **LABORATOIRES D'HYGIENE ET DE DIETETIQUE L.H.D. Société Anonyme dite:, 3 rue de Citeaux, F-75012 Paris (FR)**

(72) Inventeur: **GROUILLER, Hervé, 1, rue d'Aval Chevrey, F-21700 Arcenant (FR)**

(74) Mandataire: **Combe, André et al, CABINET BEAU DE LOMENIE 55 rue d'Amsterdam, F-75008 Paris (FR)**

**EP 0 099 374 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à une nouvelle utilisation d'un matériau polymère thermoplastique en tant que moyen de scellement, notamment pour la fixation d'insert. Ce matériau thermoplastique est surtout utile pour remplacer les chevilles. Il est également utile pour remplacer les matériaux de scellement, tels que notamment les liants du type ciment, pour la fixation des inserts et de leurs chevilles.

Par insert, on entend ici tout dispositif tel que notamment vis, pointe, crochet, piton etc..., devant être introduit dans une cavité existante ou percée dans une paroi telle que mur, plafond, cloison ou toute autre surface.

On sait que, dans le passé, pour résoudre le problème technique de la fixation d'inserts dans des cavités ou trous, on a proposé un très grand nombre de solutions impliquant l'utilisation de dispositifs (notamment des chevilles) métalliques ou en matière plastique, introduits en force ou expansés in situ dans lesdites cavités ou lesdits trous destinés à les recevoir. Or il se trouve que ces dispositifs présentent de nombreux inconvénients. Ils n'épousent pas parfaitement la forme de la cavité que les reçoit, et si, par un artifice comme l'expansion mécanique d'une partie déformable de ces dispositifs, on parvient dans beaucoup de cas à pallier cette difficulté, il n'en reste pas moins que les efforts sur les parois internes de la cavités réceptrice sont mal répartis et n'assurent par toujours une parfaite immobilisation du crochet, de la vis ou de tout autre insert qui y est introduit ou qui s'y trouvait introduit au départ. La partie déformable reste déformable car sa rigidité propre n'a pas changé après la pose. Par ailleurs, les dispositifs antérieurement connus, déformables, expansibles ou rigides, s'ils procurent une bonne immobilisation, impliquent des efforts élevés en des points de contact très localisés sur les parois internes de la cavité.

Selon l'invention, on préconise une nouvelle solution palliant les inconvénients précités et mettant en oeuvre un matériau thermoplastique qui conserve sans diminution importante la plupart de ses propriétés mécaniques (résistance à la flexion, résistance à l'arrachage et résistance au choc notamment) quand on le chauffe à une température inférieure à son point de ramollissement (en abrégé »PR«), et qui, après avoir été porté à une température supérieure à son PR, présente un effet de durcissement retardé lors du refroidissement, en ce sens qu'il reste à l'état ramolli pendant un certain laps de temps (suffisant pour le modeler et le mettre en place dans les cavités) à une température inférieure ou égale à son PR avant de se solidifier.

La nouvelle utilisation selon l'invention, en tant que moyen de scellement notamment pour la fixation d'insert, d'un matériau thermoplastique conservant la plupart de ses propriétés mécaniques quand il est chauffé à une température inférieure à son point de ramollissement, est caractérisé en ce que l'on fait appel à un matériau thermoplastique ayant (i) un point de ramollissement situé entre 50° C et 70° C, et (ii) un durcissement retardé lors du refroidissement, après avoir été porté à une température supérieure à son point de ramollissement.

La température de durcissement du matériau thermoplastique selon l'invention sera inférieure ou égale à celle du PR.

De façon avantageuse, le matériau thermoplastique aura un PR net, c'est-à-dire que la variation de température lors de la transition de l'état solide à l'état ramolli, voire fondu, sera inférieure ou égale à 5° C. Ceci est important pour que le matériau thermoplastique conserve, sans qu'elles soient considérablement diminuées, ses propriétés mécaniques quand il est chauffé jusqu'à la température de son PR, et pour qu'il puisse se distinguer des autres matériaux thermoplastiques qui présentent un PR progressif en fonction de la température et qui ont des propriétés mécaniques diminuant de façon très sensible avec l'élévation de température.

De façon également avantageuse, le matériau thermoplastique selon l'invention qui a un PR situé entre 50 et 70° C sera porté à une température supérieure d'au moins 10° C à la température de son PR pour présenter un bon durcissement retardé (de l'ordre de 1 à 5 minutes environ) lors du refroidissement. Ainsi pour un matériau ayant un PR situé entre 50 et 70° C il est recommandé, en vue de son durcissement retardé, de le porter à une température comprise entre 60 et 80° C.

D'un point de vue pratique, on fera appel à un matériau thermoplastique ayant un PR net situé entre 55 et 65° C que l'on portera à une température supérieure d'au moins 10° C à son PR (soit avantageusement entre respectivement 65° C et respectivement 80° C) pour sa mise en place à l'état plastifié tant qu'il n'a pas durci lors du refroidissement.

Parmi les matériaux thermoplastiques qui conviennent selon l'invention, on peut notamment mentionner les produits qui présentent à l'état solide une structure essentiellement cristalline, tels que la polycaprolactone (en abrégé »PCL«), les transpolydiènes (en abrégé »TPD«), leurs mélanges entre eux, d'une part, et avec les polyuréthanes (en abrégé »PU«), d'autre part. En particulier, la PCL ayant un poids moléculaire moyen de l'ordre de 35 000 à 40 000, qui a un PR net situé entre 50 et 60° C (elle perd toutes ses propriétés mécaniques et ne peut même plus supporter son poids à la température de 60° C), peut, par exemple, être portée à 70° C; elle présente alors lors du refroidissement un durcissement retardé, conservant sa plasticité à l'état ramolli pendant quelques minutes même si la température décroît au-dessous de son PR. Par la suite, quand le matériau tel que le PCL mis en place, aura retrouvé sa dureté, non seulement il sera très solide et résistera parfaitement aux chocs, à l'arrachage, à la flexion, mais il faudra le réchauffer au-dessus de son PR pour parvenir à

le deformer à nouveau ou à l'extraire. Les températures de 50 à 70°C n'étant jamais atteintes par l'atmosphère normale d'une maison d'habitation ou un bureau, il n'y a aucun danger de ramollissement autre qu'accidentel ou volontaire.

Les matériaux thermoplastiques préférés selon l'invention sont ceux qui sont choisis parmi l'ensemble constitué par:

(i) le matériau $M_1$ qui comprend dans sa composition:
- 30 à 40 parties en poids de PCL, et
- 20 à 100 parties en poids de TPD;

(ii) le matériau $M_2$ qui comprend dans sa composition:
- 40 à 80 parties en poids de PCL,
- 20 à 100 parties en poids de TPD et
- au plus 40 parties en poids de PU;

(iii) le matériau $M_3$ qui renferme dans sa composition:
- 60 à 100 parties en poids de TPD, et
- 5 à 40 parties en poids de PU; et

(iv) le matériau $M_4$ qui renferme dans sa composition:
- 60 à 100 parties en poids de PCL et
- 5 à 40 parties en poids de PU.

Les matériaux M les plus intéressants sont ceux qui renferment dans leur composition du PU formé in situ par réaction d'un moyen I choisi parmi l'ensemble constitué par les polyisocyanates et leurs mélanges, avec un moyen II choisi parmi l'ensemble constitué par les polyols et leurs mélanges, les moyens I et II étant tels que avant réaction de polymérisation du PU, le nombre de groupes NCO libres du moyen I soit sensiblement égal au nombre de groupes OH libres du moyen II.

Pour le meilleur mode de mise en oeuvre de l'invention, on fera appel à un matériau $M_4$ préparé par imbrication du PU, lors de sa formation, dans le réseau de la PCL, comme indiqué dans la demande de brevet français n° 82—00854 déposée par la demanderesse le même jour que la presente invention et visant la préparation d'une composition thermoplastique utile notamment en tant que moyen orthopédique de contention.

Parmi les moyens I qui conviennent pour la formation in situ du PU des matériaux $M_2$, $M_3$ et $M_4$, on recommande d'utiliser des polyisocyanates renfermant au moins deux groupes NCO libres par molécule. Parmi ceux-ci on peut notamment mentionner (i) les di-, tri- et tétra-isocyanates de formule $R(NCO)_n$ (où est un nombre entier ayant une valeur comprise entre 2 et 4, et R est notamment un groupe aliphatique, cycloaliphatique, aryle ou aralkyle comprenant de 4 à 15 atomes de carbone) tels que les 2,4-toluènediisocyanate, 2,6-toluènediisocyanate, 4,4'-diphénylméthanediisocyanate, 1-6-hexaméthylènediisocyanate, 1,4-cyclohexanediisocyanate, 4,4'-dicyclohexylméthanediisocyanate et isophoronediisocyanate (i. e. le diisocyanate dérivé de 2,6-diméthyl-2,5-heptadiène-4-one), (ii) les prépolymères du type polyuréthane renfermant des groupes NCO libres et obtenus par réaction d'un polyisocyanate en excès avec un polyol, un polyoléther et/ou un polyolester, et (iii) leurs mélanges.

Parmi les moyens I mentionnés ci-dessus, les polyisocyanates les plus intéressants sont les 2-4-toluènediisocyanate, 2,6-toluènediisocyanate et 4,4'-diphénylméthanediisocyanate, les moyens préférés étant le 2,4-toluènediisocyanate et le toluènediisocyanate commercial qui renferme 80% en poids d'isomère 2,4 et 20% en poids d'isomère 2,6.

Les moyens II qui conviennent sont des polyols renfermant au moins deux groupes OH libres par molécule. Parmi ceux-ci on peut notamment citer les polyéther-polyols et les polyester-polyols énoncés dans la demande précitée. Parmi les moyens II on recommande les polyéther-polyols ayanat un poids moléculaire équivalent compris entre environ 80 et environ 400, et renfermant au moins deux groupes OH libres par molécule. Ces polyéther-polyols sont en général obtenus par condensation d'un oxyde d'alkylène (en abrégé OA) tel que l'oxyde d'éthylène et l'oxyde de propylène avec un diol tel que l'éthylèneglycol, le propylèneglycol, le diéthylèneglycol, l'hexaméthylèneglycol, le tétraméthylèneglycol et le cyclohexyl-1,4-diméthanol, un triol, un tétraol tel que le pentaérythritol, un pentol, un hexol tel que le dulcitol et le sorbitol et leurs mélanges. Cette condensation est réalisée en général à raison de 1 à 20 groupes OA par groupe OH libre de polyol.

Le TPD qui intervient dans les formulations des matériaux $M_1$, $M_2$ et $M_3$ est un polydiène essentiellement tout trans obtenu par polymérisation du type trans-trans. Le TPD utilisé selon l'invention est notamment choisi parmi l'ensemble constitué par les trans-polybutadiène, trans-polyisoprène, trans-polychloroprène et leurs mélanges, le TPD préféré étant le trans-polychloroprène.

Le cas échéant, chacun des matériaux M pourra en outre renfermer dans sa composition un ou plusieurs adjuvants notamment un moyen choisi parmi les charges minérales, les colorants et les plastifiants. On pourra ainsi utiliser au plus 35 parties en poids (notamment 5 à 35 parties en poids) de charge minérale, et/ou au plus 5 parties en poids (notamment 1 à 2 parties en poids) d'agent plastifiant. L'agent plastifiant préféré sera l'acide stéarique qui présente par ailleurs des propriétés lubrifiantes. Les adjuvants sus-visés seront avantageusement utilisés quand le matériau thermoplastique renfermera dans sa composition le TPD.

Pour préparer un des matériaux thermoplastiques de scellement $M_1$—$M_4$ ci-dessus, on préconise:

a) de mélanger les substances polymères en association, le cas échéant, avec un ou plusieurs des adjuvants précités, à une température comprise entre 40°C et 130°C, pendant 1 à 10 minutes, sous agitation, à une

vitesse angulaire comprise entre 50 et 300 tours/minute, et

b) le cas échéant, de mouler la composition résultante à une température supérieure ou égale à 60° C (de préférence comprise entre 60 et 100° C) pendant 10 à 30 minutes.

De façon avantageuse le matériau $M_1$ sera obtenu par mélange au stade a) de la PCL et du TPD en association, le cas échéant, avec un ou plusieurs adjuvants, à une température comprise entre 40 et 120° C et de préférence entre 60 et 100° C.

Pour l'obtention des matériaux $M_2$, $M_3$ et $M_4$ renfermant du polyuréthane, on initie la formation du PU en faisant réagir au stade a) le moyen I avec le moyen II in situ (c'est-à-dire dans le mélange PCL-TPD de $M_2$, dans le TPD de $M_3$ et respectivement la PCL de $M_4$) à une température comprise entre 75 et 130° C pendant 1 à 10 minutes. De façon avantageuse, avant le stade b) ou pendant celui-ci, on poursuit la formation du PU par un traitement à 60—100° C, pendant 10 à 30 minutes.

D'autres avantages et caractéristiques de l'invention seront mieux compris à la lecture qui va suivre d'exemples de préparation nullement limitatifs mais donnés à titre d'illustration.

Exemple 1

a) Dans un malaxeur étanche à pales, dans lequel on maintient une température de 80° C et une agitation de 150 tr/min, on introduit successivement
   - 800 g de polycaprolactone (produit commercialisé par la Société UNION CARBIDE sous la nomenclature de »PCL 700« et ayant un poids moléculaire moyen de 40 000 environ);
   - lorsque la polycaprolactone est ramollie (cest-à-dire environ 2 à 5 min. après l'introduction de la PCL), 70 g de polyétherpolyol (produit commercialisé par la Société PECHINEY-UGINE-KUHLMANN sous la nomenclature de »UGIPOL 3602« et ayant un poids moléculaire équivalent de 140 environ), puis
   - lorsque le mélange résultant est ramolli et homogène (c'est-à-dire environ 2 à 5 min. après l'introduction du polyétherpolyol), la quantité stoechiométrique (43 g) de 2-4-toluènediisocyanate.

On maintient le mélange résultant à 80° C sous agitation (150 tr/min.) pendant 10 minutes.

b) On stoppe l'agitation et on laisse reposer le mélange ainsi obtenu dans le malaxeur à 80° C pendant 10 minutes.

c) On verse dans un moule rectangulaire le mélange ainsi obtenu et presse à 80° C pendant 10 minutes. On obtient une feuille ayant une épaisseur comprise entre 2 et 4 mm qu'on laisse refroidir jusqu'à 15—20° C puis que l'on découpe en plaquettes prêtes à l'emploi.

Exemple 2

a) On procède comme indiqué à l'exemple 1 a) avec un malaxeur étanche à vis en remplaçant le 2,4-toluènediisocyanate par le toluènediisocyanate commercial qui comprend 80% en poids d'isomère-2,4 et 20% en poids d'isomère-2,6.

b) On injecte en continu le mélange ainsi obtenu dans des moules (de 0,5 m sur 0,5 m) et presse à 80° C pendant 20 minutes.

c) On refroidit les moules jusqu'à la température ambiante, et obtient de chaque moule une feuille ayant une épaisseur de 3 à 3,5 mm, que l'on découpe en plaquettes prêtes à l'emploi.

Exemple 3

Dans un malaxeur étanche à pales chauffé à 60° C, on introduit 60 parties en poids de PCL, on ajoute ensuite une faible quantité d'agent plastifiant (deux parties en poids d'acide stéarique). Lorsque le mélange est fondu et homogène, on ajoute 40 parties en poids de TPD (trans-polychloroprène, commercialisé sous le dénomination de »NEOPRENE AD 30« par la Société DU-PONT DE NEMOURS) et 10 à 20 parties en poids de $TiO_2$ (ayant une granulométrie inférieure ou égale à 100 μ). Le mélange résultant est maintenu sous agitation à 150 tr/min., à une température de 60° C pendant 5 minutes.

Le mélange chaud est retiré du malaxeur et est coulé dans des moules carrés (de 0,5 m de côté) et pressé à 100° C pendant 20 minutes.

Chaque moule est refroidi jusqu'à 15—20 C au moyen d'un circuit d'eau froide. Les feuilles moulées ainsi obtenues sont découpées en plaquettes prêtes à l'emploi.

Au moment de l'emploi, le matériau thermoplastique de scellement est porté à au moins 10° C au-dessus de son PR. La source de chaleur qui permet le ramollissement peut être notamment un bain d'eau chaude, un chauffage à l'étuve ou un soufflage d'air chaud. On évitera le chauffage avec une flamme nue appliquée soit directement soit au contact d'éléments chauffants dont la température serait supérieure à 200° C, car ceci provoquerait la dégradation du matériau.

Quand le matériau thermoplastique est mou, on peut le saisir directement avec des gants et l'employer tout de suite, mais il est préférable de le laisser refroidir un peu (jusqu'à 60 C par exemple) et on peut alors le saisir directement avec les doigts nus. Le matériau peut alors pendant une à deux minutes être aisément introduit dans un trou même profond, modelé, percé, étiré, moulé, recevoir des inserts de toutes

sortes, être mélangé avec d'autres produits et subir toutes les déformations souhaitées. Une fois en place ou dans la forme voulue, on laisse refroidir le matériau thermoplastique qui, en quelques minutes, retrouve sa solidité initiale. On peut alors le percer, le tarauder, puis sceller toutes sortes d'inserts.

La meilleure solution pour obtenir la solidité maximale consiste, pour une vis, à:

- introduire le matériau thermoplastique ramolli dans la cavité à remplir,
- laisser refroidir une minute environ,
- percer un avant-trou avec une pointe de diamètre environ deux fois plus faible que celui de la vis,
- laisser solidifier complètement (5 minutes), puis
- visser la vis dans l'avant-trou.

On obtient ainsi un ancrage maximal par un léger gonflement du matériau selon l'invention dans la cavité, ce matériau constituant ici une cheville thermoplastique et un matériau de scellement disposé dans la cavité et entourant l'insert.

Cette technique est très avantageuse dans les cas suivants:

Cheville dans le plâtre:
avec des chevilles classiques le plâtre éclate sous la pression; selon l'invention, l'insert épouse parfaitement la forme du trou et les efforts de gonflement dûs au vissage de la vis sont parfaitement répartis sur toute la surface intérieure du trou;

Trous à pente négative:
il peut être très avantageux, pour un plafond par exemple, de percer un trou dont le fond est plus large que l'orifice pour assurer un meilleur ancrage; dans ce cas, les chevilles classiques ne conviennent pas; en revanche, la solution selon l'invention donne un ancrage excellent;

Parois friables:
certaines cloisons de plâtre, de brique, de bois aggloméré, certains panneaux sandwich, sont constitués de matériaux mois ou peu épais qui ne supportent pas les efforts exercés sur des chevilles classiques; la solution selon l'invention permet de renforcer ces matériaux, de répartir les efforts et de remplir les vides.

**Revendications**

1. Utilisation en tant que moyen de scellement notamment pour la fixation d'insert, d'un matériau polymère thermoplastique conservant la plupart de ses propriétés mécaniques quand il est chauffé à une température inférieure à son point de ramollissement, caractérisée en ce que l'on fait appel à un matériau thermoplastique ayant (i) un point de ramollissement situé entre 50° C et 70° C, et (ii) un durcissement retardé lors du refroidissement, après avoir été porté à une température supérieure à son point de ramollissement.

2. Utilisation selon la revendication 1, caractérisée en ce que le matériau thermoplastique a un point de ramollissement net, la variation de température lors de la transition de l'état solide à l'état ramolli, voire, fondu, étant inférieure ou égale à 5° C.

3. Utilisation selon la revendication 1, caractérisée en ce que le matériau thermoplastique qui a un point de ramollissement situé entre 50 et 70° C est porté à une température supérieure d'au moins 10° C à la température de son point de ramollissement pour obtenir un durcissement retardé optimal de l'ordre de 1 à 5 minutes environ.

4. Utilisation selon l'une quelconque des revendications 1 à 3, caractérisée en ce que le matériau thermoplastique a un point de ramollissement situé entre 55 et 65° C, et en ce que ledit matériau est porté à une température comprise entre respectivement 65 et respectivement 80° C avant refroidissement.

5. Utilisation selon l'une quelconque des revendications 1 à 4, caractérisé en ce que le matériau thermoplastique est choisi parmi l'ensemble constitué par

(i) le matériau qui renferme dans sa composition
- 40 à 80 parties en poids de polycaprolactone et
- 20 à 100 parties en poids de trans-polydiène,

(ii) le matériau qui renferme dans sa composition
- 40 à 80 parties en poids de polycaprolactone,
- 20 à 100 parties en poids de trans-polydiène, et
- au plus 40 parties en poids de polyuréthane,

(iii) le matériau qui renferme dans sa composition
- 60 à 100 parties en poids de trans-polydiène et
- 5 à 40 parties en poids de polyuréthane, et

(iv) le matériau qui renferme dans sa composition
- 60 à 100 parties en poids de polycaprolactone et
- 5 à 40 parties en poids de polyuréthane.

6. Utilisation selon la revendication 5, caractérisée en ce que le matériau thermoplastique renferme dans sa composition du polyuréthane formé in situ par réaction d'un moyen I choisi parmi l'ensemble constitué par les polyisocyanates et leurs mélanges, avec un moyen II choisi parmi l'ensemble constitué par les polyols et leurs mélanges, les moyens I et II étant tels que, avant réaction de polymérisation, le nombre de groupes NCO libres du moyen I soit sensible-

ment égal au nombre de groupes OH libres du moyen II.

7. Utilisation selon la revendication 6, caractérisée en ce que le matériau thermoplastique renferme dans sa composition un polyuréthane formé in situ par réaction, à 75—130°C pendant 1 à 10 minutes sous agitation à une vitesse angulaire comprise entre 50 et 300 tours/minute, d'un moyen I choisi parmi l'ensemble constitué par le 2,4-toluènediisocyanate, le 2,6-toluènediisocyanate, le 4,4'-diphényl-méthanediisocyanate, le 1,6-hexaméthylènediisocyanate, le 1,4-cyclohexanediisocyanate, le 4,4'-dicyclohexylméthanediisocyanate, l'isophornediisocyanate et leurs mélanges, avec un moyen II choisi parmi l'ensemble des polyétherpolyols obtenus par condensation d'un oxyde d'alkylène OA, tel que notamment l'oxyde d'éthylène et l'oxyde de propylène, avec un diol tel que l'éthylèneglycol, le propylèneglycol, le diéthylèneglycol, l'hexaméthylèneglycol, le tétraméthylèneglycol et le cyclohexyl-1,4-diméthanol, un triol, un tétraol tel que le pentaérythritol, un pentol ou un hexol tel que le dulcitol et le sorbitol, cette condensation étant réalisée à raison d'environ 1 à 20 groupes OA par groupe OH libre, et les polyéther-polyols répondant à la formule générale

$$HO-(CH_2-CH_2-CH_2-CH_2O)_nH$$

(où n est un nombre entier compris entre 6 et 42), puis par un traitement à 60—100°C pendant 10 à 30 minutes pour poursuivre la polymérisation in situ du polyuréthane.

**Patentansprüche**

1. Verwendung eines thermoplastischen Polymermaterials als Einmauerungsmittel, insbesondere zum Fixieren eines Einsatzstücks, welches Polymermaterial die meisten seiner mechanischen Eigenschaften beibehält, wenn es auf eine Temperatur unterhalb seines Erweichungspunktes erhitzt ist, dadurch gekennzeichnet, daß man ein thermoplastisches Material mit (i) einem Erweichungspunkt zwischen 50°C und 70°C und (ii) einer verzögerten Aushärtung beim Abkühlen, nachdem es auf einer Temperatur oberhalb seines Erweichungspunkts gebracht wurde, einsetzt.

2. Verwendung nach Anspruch 1, dadurch gekennzeichnet, daß das thermoplastische Material einen deutlichen Erweichungspunkt hat, wobei die Temperaturänderung beim Übergang vom festen Zustand in den erweichten bzw. geschmolzenen Zustand weniger oder gleich 5°C beträgt.

3. Verwendung nach Anspruch 1, dadurch gekennzeichnet, daß das einen Erweichungspunkt zwischen 50 und 70°C aufweisende thermoplastische Material zur Erzielung einer optimalen verzögerten Härtung im Bereich von etwa 1 bis 5 min auf eine Temperatur gebracht wird, die zumindest 10°C über der Temperatur seines Erweichungspunkts liegt.

4. Verwendung nach einem der Ansprüche 1 bis 3, dadurch gekennzeichnet, daß das thermoplastische Material einen Erweichungspunkt zwischen 55 und 65°C hat und vor dem Abkühlen auf eine Temperatur zwischen 65 bzw. 80°C gebracht wird.

5. Verwendung nach einem der Ansprüche 1 bis 4, dadurch gekennzeichnet, daß das thermoplastische Material ausgewählt ist aus der Gruppe bestehend aus

(i) einem Material, das in seiner Zusammensetzung
- 40 bis 80 Gewichtsteile Polycaprolactam und
- 20 bis 100 Gewichtsteile trans-Polydien

enthält,

(ii) einem Material, das in seiner Zusammensetzung
- 40 bis 80 Gewichtsteile Polycaprolactam,
- 20 bis 100 Gewichtsteile trans-Polydien und
- höchstens 40 Gewichtsteile Polyurethan

enthält,

(iii) einem Material, das in seiner Zusammensetzung
- 60 bis 100 Gewichtsteile trans-Polydien und
- 5 bis 40 Gewichtsteile Polyurethan enthält, und

(iv) einem Material, das in seiner Zusammensetzung
- 60 bis 100 Gewichtsteile Polycaprolactam und
- 5 bis 40 Gewichtsteile Polyurethan enthält.

6. Verwendung nach Anspruch 5, dadurch gekennzeichnet, daß das thermoplastische Material in seiner Zusammensetzung Polyurethan enthält, das durch Reaktion eines Mittels I, ausgewählt aus der Gruppe bestehend aus Polyisocyanaten und ihren Mischungen, mit einem Mittel II, ausgewählt aus der Gruppe bestehend aus Polyolen und ihren Mischungen, in situ entsteht, wobei die Mittel I und II derart sind, daß vor der Polymerisationsreaktion die Anzahl an freien NCO-Gruppen des Mittels I im wesentlichen gleich der Anzahl an freien OH-Gruppen des Mittels II ist.

7. Verwendung nach Anspruch 6, dadurch gekennzeichnet, daß das thermoplastische Material in seiner Zusammensetzung ein Polyurethan enthält, das in situ durch Reaktion bei 75 bis 130°C während 1 bis 10 min unter Rühren mit einer Winkelgeschwindigkeit zwischen 50 und 300 U/min eines Mittels I, ausgewählt aus der Gruppe bestehend aus 2,4-Toluoldiisocyanat, 2,6-Toluoldiisocyanat, 4,4'-Diphenylmethandiisocyanat, 1,6-Hexamethylendiisocyanat, 1,4-Cyclohexandiisocyanat, 4,4'-Dicyclohexyl-methandiisocyanat, Isophorondiisocyanat und Mischungen davon, mit einem Mittel II, ausgewählt aus

der Gruppe von durch Kondensation eines Alkylenoxids OA, wie insbesondere Äthylenoxid und Propylenoxid, mit einem Diol, wie Äthylenglykol, Propylenglykol, Diäthylenglykol, Hexamethylenglykol, Tetramethylenglykol und Cyclohexyl-1,4-dimethanol, einem Triol, einem Tetraol, wie Pentaerythrit, einem Pentit oder einem Hexit, wie Dulcit und Sorbit, erhaltenen Polyätherpolyolen, wobei diese Kondensation in einem Verhältnis von etwa 1 bis 20 OA-Gruppen pro freier OH-Gruppe durchgeführt wird und die Polyätherpolyole der allgemeinen Formel

$$HO-(CH_2-CH_2-CH_2-CH_2O)_nH$$

(worin n eine ganze Zahl zwischen 6 und 42 ist) entsprechen, und anschließend durch eine Behandlung bei 60 bis 100°C während 10 bis 30 min zur Vervollständigung der in situ-Polymerisation des Polyurethans entsteht.

## Claims

1. Use as sealing means particularly for fixing insert, of a thermoplastic polymer material retaining most of its mechanical properties when heated to a temperature lower than its softening point, characterized in that the thermoplastic material used has (i) a softening point between 50 C and 70 C, and (ii) a delayed setting under cooling, after being brought to a temperature higher than its softening point.

2. Use according to claim 1, characterized in that the thermoplastic material has a precise softening point, the temperature variation during the transition from the solid state to the softened, even molten state, being lower than or equal to 5 C.

3. Use according to claim 1, characterized in that the thermoplastic material which has a softening point between 50 and 70°C, is brought to a temperature higher by at least 10°C than the softening point temperature, to obtain an optimal delayed setting of about 1 to 5 minutes.

4. Use according to anyone of claims 1 to 3, characterized in that the thermoplastic material has a softening point between 55 and 65°C, and in that said material is brought to a temperature between respectively 65 and 80°C before cooling.

5. Use according to anyone of claims 1 to 4, characterized in that the thermoplastic material is selected from the group constituted by

(i) the material containing in its composition
- 40 to 80 parts by weight of polycaprolactone and
- 20 to 100 parts by weight of trans-polydiene,

(ii) the material containing in its composition
- 40 to 80 parts by weight of polycaprolactone,
- 20 to 100 parts by weight of trans-polydiene, and
- at the most 40 parts by weight of polyurethane,

(iii) the material containing in its composition
- 60 to 100 parts by weight of trans-polydiene and
- 5 to 40 parts by weight of polyurethane and

(iv) the material containing in its composition
- 60 to 100 parts by weight of polycaprolactone
- 5 to 40 parts by weight of polyurethane.

6. Use according to claim 5, characterized in that the thermoplastic material contains in its composition polyurethane formed in situ by the reaction of means I selected from the group constituted by polyisocyanates and the mixtures thereof, with means II selected from the group constituted by polyols and the mixtures thereof, means I and II being such that, before reaction of polymerisation, the number of free NCO groups of means I is substantially equal to the number of free OH groups of means II.

7. Use according to claim 6, characterized in that the thermoplastic material contains in its composition a polyurethane formed in situ by reaction, at 75—130°C for 1 to 10 minutes under stirring at an angular speed of between 50 and 300 revs/minute, of a means I selected from the group constituted by 2,4-toluenediisocyanate, 2,6-toluenediisocyanate, 4,4'-diphenyl-methanediisocyanate, 1,6-hexamethylenediisocyanate, 1,4-cyclohexanediisocyanate, 4,4'-dicyclohexylmethanediisocyanate, isophornediisocyanate and the mixtures thereof, with a means II selected from the group of polyetherpolyols obtained by the condensation of an alkylene oxide OA, such as in particular ethylene oxide and propylene oxide, with a diol such as ethyleneglycol, propyleneglycol, diethyleneglycol, hexamethyleneglycol, tetramethyleneglycol and cyclohexyl-1,4-dimethanol, a triol, a tetraol such as pentaerythritol, a pentol or a hexol such as dulcitol and sorbitol, said condensation being carried out at a rate of about 1 to 20 OA groups per free OH group, and the polyether polyols of the general formula

$$HO-(CH_2-CH_2-CH_2-CH_2O)_nH$$

(wherein n is an integer between 6 to 42), then by a treatment at 60—100°C for 10 to 30 minutes to continue the polymerisation in situ of polyurethane.